# EUROPÄISCHE PATENTSCHRIFT

(11) **EP 1 549 863 B1**
(45) Veröffentlichungstag und Bekanntmachung des Hinweises auf die Patenterteilung: **05.07.2006**
(21) Anmeldenummer: 04763313.6
(22) Anmeldetag: 17.07.2004
(51) Int. Cl.: F16C 33/12, F16C 33/06

(54) **GLEITLAGERVERBUNDWERKSTOFF**
PLAIN BEARING COMPOSITE MATERIAL
MATIERE COMPOSITE POUR PALIER A GLISSEMENT

(30) Priorität: 20.09.2003 DE 10343618
(43) Veröffentlichungstag der Anmeldung: 06.07.2005
(73) Patentinhaber: KS Gleitlager GmbH, 68789 St. Leon-Rot (DE)
(72) Erfinder: SCHUBERT, Werner, 69168 Wiesloch (DE); DEICKE, Klaus, 74257 Untereisesheim (DE); STEFFENS, Thomas, 74906 Bad-Rappenau-Zimmerhof (DE); MÜLLER, Bernd, 68753 Kirrlach (DE)
(74) Vertreter: Dreiss, Fuhlendorf, Steimle & Becker
(86) Internationale Anmeldenummer: PCT/EP2004/008015
(87) Internationale Veröffentlichungsnummer: WO 2005/038278

(56) Entgegenhaltungen:
- EP-A- 0 440 275
- EP-A- 0 908 539
- EP-A- 0 982 410
- WO-A-96/25527
- DE-A- 4 201 793
- US-B1- 6 273 972

## Beschreibung

Die Erfindung betrifft einen Gleitlagerverbundwerkstoff mit einer Trägerschicht aus Stahl und.einer darauf unlösbar aufgebrachten Gleitschicht aus einer Aluminiumlagerlegierung.

Derartige Gleitlagerverbundwerkstoffe sind bekannt und werden im besonderen für die Herstellung von Gleitlagerschalen für Pleuellagerungen und für die Lagerung der Kurbelwelle im Kurbelgehäuse eines Kraftfahrzeugsverbrennungsmotors verwendet. Auch die Anwendung eines solchen Gleitlagerverbundwerkstoffs zur Herstellung gerollter Lagerbuchsen, beispielsweise Pleuellagerbuchsen oder Kolbenbolzenbuchsen, die den Kolbenbolzen im Kolben lagern, sind bekannt.

DE 198 00 433 C2 beschreibt zwar keine Gleitlagerverbundwerkstoffe mit einer Trägerschicht aus Stahl, sie befasst sich aber mit einem Stranggießverfahren zum Vergießen einer Aluminium-Gleitlagerlegierung mit 3 bis 6 Gew.-% Zink, 0,3 bis 2,0 Gew.-% Kupfer, 0,2 bis 1,0 Gew.-% Magnesium, 0,3 bis 2,0 Gew.-% Silizium und 2 bis 4,5 Gew.-% Blei. Hierbei werden fein verteilte tropfenförmige Blei-Ausscheidungen im Stranggussstück mit einer Abmessung der Tropfen von weniger als 10 µm gebildet. Das Blei wirkt als fein und homogen verteilter Schmierstoff bei der Anwendung dieser Aluminiumlegierung als Gleitlagerlegierung.

EP 0 440 275 B1 befasst sich ebenfalls mit dem Vergießen monotektischer Aluminiumlagerlegierungen. In dieser Druckschrift ist die Rede von Aluminiumlagerlegierung, zur Herstellung von Gleitlagerwerkstoffen, die eine oder mehrere der Komponenten 1 bis 50 Gew.-%, vorzugsweise 5 bis 30 Gew.-% Blei, 3 bis 50 Gew.- %, vorzugsweise 5 bis 30 Gew.-% Wismut und 15 bis 50 Gew.-% Indium sowie zusätzlich eine oder mehrere der Komponenten 0,1 bis 20 Gew.-% Silizium, 0,1 bis 20 Gew.-% Zinn, 0,1 bis 10 Gew.-% Zink, 0,1 bis 5 Gew.-% Magnesium, 0,1 bis 5 Gew.-% Kupfer, 0,05 bis 3 Gew.-% Eisen, 0,05 bis 3 Gew.-% Mangan, 0,05 bis 3 Gew.-% Nickel und 0,001 bis 0,30 Gew.-% Titan enthalten. Weitere Hinweise auf die konkrete Zusammensetzung einer Aluminiumlagerlegierung lassen sich dieser Druckschrift nicht entnehmen.

EP 0 190 691 A1 offenbart einen Gleitlagerverbundwerkstoff mit einer Trägerschicht aus Stahl und einer darauf unlösbar aufgebrachten Gleitschicht aus einer Aluminiumlagerlegierung, deren Zusammensetzung nach Anspruch 1 dieser Druckschrift im wesentlichen besteht aus 4 bis 9 Gew.-% Wismut, 1 bis 4,5 Gew.-% Silizium, 0 bis 1,7 Gew.-% Kupfer, 0 bis 2,5 Gew.-% Blei, und Rest Aluminium. Im Anspruch 3 dieser Druckschrift werden als weitere Zusätze eines oder mehrere der Materialen ausgewählt aus der Gruppe von Nickel, Mangan, Chrom, Zinn, Antimon und Zink genannt, wobei der Anteil von Zink bis zu 5 Gew.-% betragen darf. Die in dieser Druckschrift konkret offenbarten Zusammensetzungen der Aluminiumlagerlegierung lassen die gleichzeitige Verwendung von Wismut und Blei als vorteilhaft erscheinen.

Unter dem Handelsnamen KS R41 ist ein Gleitlagerverbundwerkstoff mit einer Trägerschicht aus Stahl und einer darauf unlösbar aufgebrachten Gleitschicht aus AlZn5Pb4Sil, 5CulMg bekannt geworden. Ein bleifreier Eleitlagerverbundwerkstoff ist aus der WO 96/25527 bekannt.

Der vorliegenden Erfindung liegt die Aufgabe zugrunde, einen umweltfreundlichen Gleitlagerverbundwerkstoff der eingangs genannten Art bereitzustellen, dessen Aluminiumlagerlegierung gut vergießbar und umformbar ist und die aber tribologisch hervorragende Eigenschaften aufweist.

Diese Aufgabe wird erfindungsgemäß durch einen Gleitlagerverbundwerkstoff mit den Merkmalen des beigefügten Anspruchs 1 gelöst.

Es wurde erfindungsgemäß festgestellt, dass auf den Zusatz von Blei verzichtet werden kann, wenn Wismut im Bereich von 2,5 bis 6 Gew.-%, insbesondere im Bereich von 2,5 bis 4,5 Gew.-% zugesetzt wird und wenn ein Zinkgehalt von 4,4 bis 6 Gew.-%, vorzugsweise von wenigstens 5 Gew.-% vorgesehen wird. Es wird davon ausgegangen, dass das Zusammenwirken von Wismut im genannten gewichtsprozentualen Bereich mit feinen Ausscheidungen von Zink im mit Zink übersättigten Aluminium-Mischkristall, eine dem Schmierstoff Blei im wesentlichen nahezu gleichwirkende Eigenschaft als gleitre ibungsvermindernder Zusatz, also als Schmiermittel entfaltet. Diese Erkenntnis war keinesfalls naheliegend, da sich - wie vorstehend erwähnt - wismuthaltige Aluminiumlagerlegierungen bislang gerade durch den Zusatz von Blei erst ausgezeichnet haben.

Durch Lösungsglühen und unmittelbar anschließendes Abschrecken werden vorzugsweise Ausscheidungen von Zink mit einer Teilchengröße von weniger als 10 *µ*m erreicht.

Eine bevorzugte Zusammensetzung einer bleifreien Aluminiumlagerlegierung ist gegeben durch AlZn5Bi4Sil,5CulMg.

Auch die neben Zink und Wismut weiteren Bestandteile Silizium, Kupfer und vor allem Magnesium sind für die zufriedenstellenden und vorteilhaften Eigenschaften des erfindungsgemäßen Gleitlagerverbundwerkstoffs wesentlich. So wirkt Magnesium verfestigend; es bildet mit Aluminium die intermetallische Phase Al₃Mg₂. Kupfer bildet in vorteilhafter Weise die intermetallische Phase Al₂Cu. Hierdurch wird die Festigkeit des Aluminium-Mischkristalls erhöht, was darauf zurückgeführt wird, dass die Bestandteile den Kristall verspannen und damit stabilisieren und hart machen.

## Patentansprüche

1. Gleitlagerverbundwerkstoff mit einer Trägerschicht aus Stahl und einer darauf unlösbar aufgebrachten Gleitschicht aus einer bleifreien Aluminiumlagerlegierung bestehend aus 4,4 - 6 Gew.-% Zink, 2,5 - 6,0 Gew.-% Wismut, 1,0 - 2,0 Gew.-% Silizium, 0,8 - 1,2 Gew.-% Kupfer und 0,2 - 0,8 Gew.-% Magnesium sowie gegebenenfalls Titan, Nickel, Mangan, Zinn jeweils bis höchstens 0,2 Gew.-% und weiter gegebenenfalls Eisen bis höchstens 0,6 Gew.-% und weiter gegebenenfalls verunreinigungsbedingten Zusätzen von jeweils höchstens 0,1 Gew.-%, deren Gesamtmenge in der Summe aber nicht mehr als 1 Gew.-% beträgt, wobei die Aluminiumlagerlegierung einen mit Zink übersättigten Aluminium-Mischkristall bildet, in dem Zink durch Lösungsglühen und anschließendes Abschrecken in feiner Verteilung vorliegt.

2. Gleitlagerverbundwerkstoff nach Anspruch 1, **dadurch gekennzeichnet, dass** Zink mit einer Teilchengröße von weniger als 10 µm vorliegt.

3. Gleitlagerverbundwerkstoff nach Anspruch 1 oder 2, **gekennzeichnet durch** 2,5 - 4,5 Gew.-% Wismut.

4. Gleitlagerverbundwerkstoff nach Anspruch 1, 2 oder 3, **gekennzeichnet durch** wenigstens 5 Gew.-% Zink.

## Claims

1. Plain bearing composite material comprising a carrier layer made from steel and a sliding layer which is disposed thereon in an irremovable fashion and consists of an aluminium bearing alloy consisting of 4,4 to 6 weight-% of zinc, 2,5 to 6,0 weight-% of bismuth, 1,0 to 2,0 weight-% of silicon, 0,8 to 1,2 weight-% of copper and 0,2 to 0,8 weight-% of magnesium, and optionally titanium, nickel, manganese, tin, each in amounts of not more than 0,2 weight-%, and furthermore optionally iron in an amount of up to 0,6 weight-% and optionally impurity-related additives of maximally 0,1 weight-% each, the overall quantity thereof amounting to maximally 1 weight-%, wherein the aluminium bearing alloy forms an aluminium mixed crystal which is supersaturated with zinc, said zinc being finely distributed by solution annealing and subsequent quenching.

2. Plain bearing composite material according to claim 1, **characterized in that** zinc is present in a particle size of less than 10 µm.

3. Plain bearing composite material according to claim 1 or 2, **characterized by** 2,5 to 4,5 weight-% of bismuth.

4. Plain bearing composite material according to claim 1, 2, or 3, **characterized by** at least 5 weight-% of zinc.

## Revendications

1. Matériau composite pour palier à glissement avec une couche support en acier et, rapportée de manière inamovible sur celle-ci, une couche de glissement en alliage d'aluminium pour palier exempt de plomb, composé de 4,4 à 6 % en poids de zinc, 2,5 à 6,0 % en poids de bismuth, 1,0 à 2,0 % en poids de silicium, 0,8 à 1,2 % en poids de cuivre et 0,2 à 0,8 % en poids de magnésium ainsi qu'éventuellement du titane, du nickel, du manganèse et du zinc, selon un pourcentage pondéral individuel inférieur ou égal à 0,2 %, ainsi qu'éventuellement du fer à raison de 0,6 % en poids maximum et en outre éventuellement des éléments additionnels liés à des impuretés, dont la teneur individuelle ne dépasse pas 0,1 % en poids et dont la teneur cumulée ne dépasse pas 1 % en poids, l'alliage d'aluminium pour palier formant une solution solide d'aluminium sursaturée en zinc, dans laquelle le zinc est présent à l'état finement dispersé grâce à un recuit de mise en solution suivi d'une trempe.

2. Matériau composite pour palier à glissement selon la revendication 1, **caractérisé en ce que** la taille des particules de zinc est inférieure à 10 µm.

3. Matériau composite selon la revendication 1 ou 2, **caractérisé par** une teneur en bismuth comprise entre 2,5 et 4,5 % en poids.

4. Matériau composite selon l'une quelconque des revendications 1, 2 ou 3, **caractérisé par** une teneur en zinc supérieure ou égale à 5 % en poids.
